# FASCICULE DE BREVET EUROPEEN

(11) **EP 1 464 383 B1**
(45) Date de publication et mention de la délivrance du brevet: **10.05.2017**
(21) Numéro de dépôt: 04290778.2
(22) Date de dépôt: 23.03.2004
(51) Int. Cl.: B01J 8/02, B01J 8/04, B01F 3/04, B01F 15/02

(54) **RÉACTEUR COMPRENANT UN DISPOSITIF DE MÉLANGE ET DE DISTRIBUTION D'UNE PHASE GAZ ET D'UNE PHASE LIQUIDE ALIMENTANT UN LIT GRANULAIRE ET PROCÉDÉ D'HYDROGÉNATION SÉLECTIVE L'UTILISANT**
REAKTOR MIT EINER VORRICHTUNG ZUR MISCHUNG UND VERTEILUNG EINER GASPHASE UND EINER FLÜSSIGKEITPHASE ZUR ZUFUHR IN EIN FESTBETT UND VERFAHREN ZUR SELEKTIVEN HYDRIERUNG DAMIT
REACTOR COMPRISING A DEVICE FOR MIXING AND SPREADING A GASEOUS PHASE AND A LIQUID PHASE FOR FEEDING A GRANULAR BED AND SELECTIVE HYDROGENATION PROCESS THEREFOR.

(30) Priorité: 02.04.2003 FR 0304120
(43) Date de publication de la demande: 06.10.2004
(73) Titulaire: Institut Français du Pétrole, 92852 Rueil-Malmaison Cedex (FR)
(72) Inventeur: Boyer, Christophe, 69390 Charly (FR); Coupard, Vincent, 69120 Vaulx en Velin (FR)

(56) Documents cités:
- EP-A- 0 207 673
- FR-A- 2 745 202
- FR-A- 2 813 023
- US-A1- 2002 098 136

## Description

### Domaine de la technique:

Dans de nombreux équipements et procédés chimiques, il est nécessaire de distribuer de façon la plus homogène et régulière possible une phase gazeuse et une phase liquide, pour assurer notamment la proportion voulue entre les différents fluides ou réactifs. Il est également nécessaire d'assurer une répartition sensiblement égale des fluides ou réactifs le long de la surface frontale d'un réacteur, afin que les différentes zones de ce réacteur travaillent dans des conditions sensiblement identiques.

### Antérieur:

La présente invention constitue une amélioration du dispositif d'amenée de distribution et de mélange décrit dans la demande de brevet français 02/09.076. Le dispositif selon la dite demande comprend des moyens d'alimentation de plateaux distributeurs destinés à équiper des réacteurs en lits fixes travaillant dans certaines plages de rapport gaz/liquide, qui permettent de définir entre la phase liquide et la phase gaz une interface aussi stable que possible sur l'ensemble de la plage opératoire prévue pour le réacteur. Le plateau distributeur lui même contient une pluralité de cheminées traversant le dit plateau et comportant dans leur partie supérieure, située au dessus du plateau, une série d'orifices latéraux répartis sur plusieurs niveaux et alimentés pour une partie d'entre eux par la phase liquide, et pour l'autre partie par la phase gaz.

L'originalité du mode d'alimentation de ces cheminées réside dans l'existence au-dessus du plateau d'un volume de rétention de la phase liquide dont l'interface avec la phase gaz située au dessus est maintenu aussi stable et horizontal que possible de manière à garantir une alimentation régulière des cheminées qui reçoivent séparément un débit gaz et un débit liquide à peu près constant. Pour permettre la réalisation de cette interface stable et pratiquement horizontale, l'alimentation du liquide est organisée de façon à ce que le liquide soit introduit au sein du volume de rétention de la dite phase liquide ce qui permet d'éviter des remous et de limiter le phénomène de moussage qui peut se produire pour certains fluides à l'interface avec la phase gaz.

La présente invention se situe dans le même contexte et permet d'obtenir une stabilité accrue de l'interface entre le gaz et le liquide. Ceci conduit à améliorer la distribution du liquide et du mélange liquide/gaz sur la section du réacteur. Elle permet également d'obtenir un amortissement des fluctuations instantanées de débit, fréquentes dans les systèmes d'écoulement de fluides, et de limiter les problèmes de moussage. Sa mise en oeuvre est très simple sur le plan technologique, ce qui rend la présente invention particulièrement bien adaptée aux remodelages d'unités existantes.

L'invention peut néanmoins parfaitement s'appliquer également au cas des unités neuves.

L'état de la technique présenté dans la demande citée en référence peut être complété par le brevet US 4235847 qui décrit un dispositif de mélange et de distribution de deux phases fluides alimentées au travers de deux conduites latérales indépendantes et mettant en oeuvre deux zones annulaires périphériques pour l'introduction séparée de la phase liquide et de la phase gaz.

Dans ce brevet la phase liquide quitte la zone annulaire de répartition par débordement au niveau de la partie supérieure de la dite zone, ce qui peut engendrer des perturbations de l'interface entre la phase liquide et la phase gaz. De plus, dans ce brevet les cheminées sont alimentées seulement en partie supérieure par une phase mixte de type brouillard. Le dispositif est donc très sensible aux variations d'homogénéité de la composition de cette phase mixte.

Le document FR2813023 décrit un dispositif d'alimentation en mélange gaz-liquide. Le dispositif comprend un plateau sur toute la largeur du réacteur et des cheminées perforées sur leur longueur.

### Description des applications de l'invention:

La présente invention s'applique aux réacteurs comportant une pluralité de lits catalytiques fixes traversés à co-courant descendant par une phase gaz et une phase liquide qui peuvent être introduites séparément ou en mélange. Plus particulièrement, l'invention s'applique à des réacteurs pour lesquels le flux liquide, c'est à dire le débit de la phase liquide rapporté à la section vide du réacteur est compris entre 1 et 100 kg/(m².s) et plus habituellement compris entre 20 et 80 kg/(m².s). L'invention est particulièrement bien adaptée aux cas où le rapport volumique des phases gaz et liquide est compris entre 0 et 400 (0 exclus) et préférentiellement compris entre 0 et 100 (0 exclus).

La présente invention s'applique également au cas où la réaction nécessite un contact étroit entre les phases en présence, de manière à faciliter la dissolution d'un des composés de la phase gaz, par exemple l'hydrogène, au sein de la phase liquide. Ce cas est celui qu'on rencontre dans les hydrogénations sélectives ou totales de coupes hydrocarbonées pouvant avoir de 2 à 10 atomes de carbone ou plus, ce qui est le cas en particulier de l'hydrogénation des essences de pyrolyse.

Plus généralement, l'invention s'applique aux réacteurs chimiques pour la mise en oeuvre de diverses réactions, notamment d'hydrocraquage, d'hydrotraitement, d'hydrodésulfuration, d'hydrodéazotation, d'hydrogénation de coupes variées, comme l'hydrogénation de composés aromatiques dans des coupes aliphatiques et/ou naphténiques, l'hydrogénation sélective des composés acétyléniques et dioléfiniques dans des coupes oléfiniques, et l'hydrogénation d'oléfines dans des coupes aromatiques.

Elle peut également être mise en oeuvre dans un réacteur de conversion de gaz de synthèse (comprenant de l'hydrogène et du monoxyde de carbone) en alcools ou en hydrocarbures.

L'invention trouve aussi son application dans des réacteurs mettant en oeuvre des réactions nécéssitant un mélange très fin d'une phase gaz et d'une phase liquide,par exemple les réactions d'oxydation partielle ou totale, les réactions d'amination, d'acétyloxydation, d'ammoxydation et d'halogénation, en particulier de chloration.

Dans le domaine spécifique des réactions d'hydrodésulfuration, d'hydrodéazotation, d'hydrocraquage, et particulièrement lorsqu'on désire atteindre des conversions poussées pour obtenir un produit contenant par exemple moins de 30 ppm ou même moins de 10 ppm (parties par million) de soufre, il est nécessaire d'avoir une excellente distribution des phases gaz et liquide, sachant qu'on se situe dans une gamme de rapport volumique gaz sur liquide compris entre 1 et 400, et le plus souvent entre 1 et 100.

On retrouve un cas analogue d'utilisation de l'invention lors de l'utilisation d'un fluide auxiliaire de refroidissement, appellé "quench" dans la terminologie anglo-saxonne, où un très bon contact entre ce fluide auxiliaire et les fluides réactifs, (ou fluides "process" dans la terminologie anglo-saxonne) est également nécessaire.

Le dispositif décrit dans la présente invention concerne donc les réacteurs à lits fixes, par exemple les réacteurs d'hydrogénation sélective ou d'hydrotraitement de coupes pétrolières, mais plus généralement tout réacteur chimique à lit fixe traitant une charge gaz et une charge liquide ci-après appelées phase gaz et phase liquide qui doivent être introduites en mélange sur le ou les lits granulaires compris dans le réacteur, ce mélange devant être le plus homogène possible et couvrir au mieux la section du ou des lits réactionnels.

Plus particulièrement le dispositif de mélange et de distribution décrit dans la présente invention concerne les réacteurs d'hydrogénation sélective dans lesquels le rapport volumique de la phase gaz sur la phase liquide est compris entre 3 et 400 et préférentiellement compris entre 50 et 300. Dans la plupart des cas, les phases gaz et liquide alimentant le réacteur seront introduites séparément dans le réacteur. Il est néanmoins possible de traiter le cas d'une alimentation mixte (en mélange) des deux phases, en installant éventuellement un dispositif favorisant la séparation des phases liquide et gaz tel notamment qu'un coalesceur de type nid d'abeille. Pour la suite de la description, on se placera dans le cas d'une alimentation séparée du réacteur par les phases gaz et liquide.

### Description des figures:

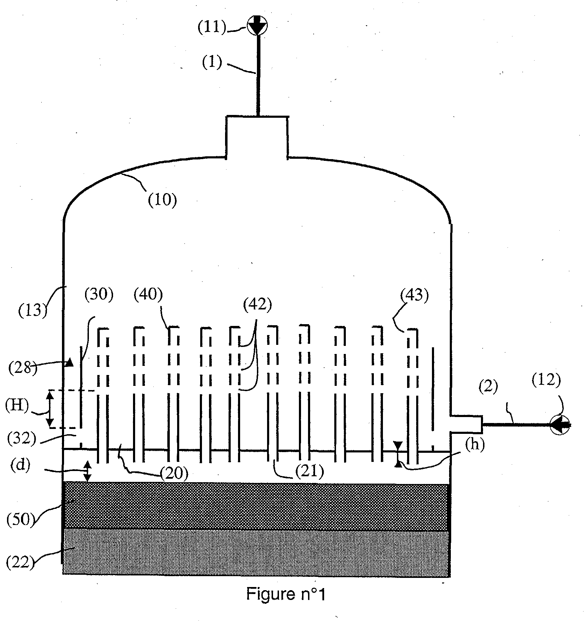

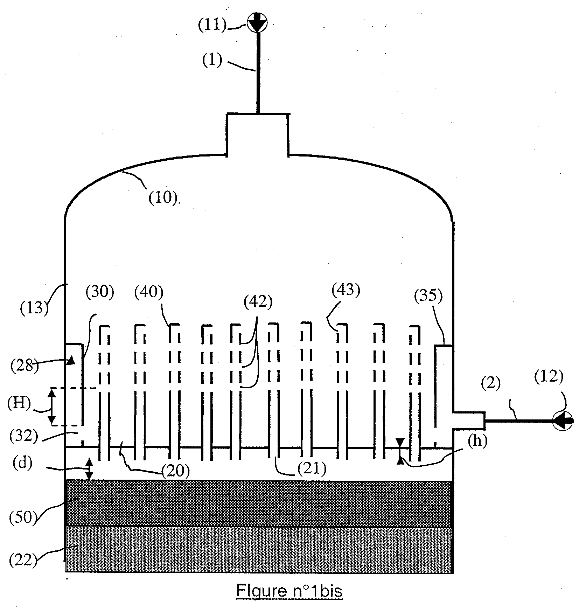

La figure 1 représente une vue de la partie supérieure du réacteur muni d'un plateau distributeur comportant un certain nombre de cheminées. L'arrivée de la phase liquide se fait par une tubulure latérale dans une zone annulaire selon la présente invention.
La figure 1 bis est une variante de l'invention dans laquelle la zone annulaire est fermée à sa partie supérieure par un toit formant une surface continue.
La figure 2 est une vue de dessus du dispositif de distribution permettant de visualiser la zone annulaire et sa disposition par rapport aux cheminées. La figure 2 bis met en évidence les moyens de fixation de la paroi délimitant la zone annulaire.
Les figures 3 et 3 bis présentent deux modes de réalisation des sections de passage inférieures mettant en communication la zone annulaire et la partie centrale du plateau distributeur
Les figures 4a et 5a sont des relevés de tomographie destinés à illustrer respectivement l'exemple comparatif et celui selon l'invention ; les figures 4b et 5b sont des profils de concentration en phase gaz selon un diamètre du réacteur issus des relevés tomographiques.

On se réfère maintenant à la figure 1. La phase gaz (11) est introduite généralement par le haut du réacteur au moyen d'une tubulure (1). La phase liquide (12) est introduite par une conduite (2) traversant la paroi latérale du réacteur à un niveau compris entre le niveau du plateau distributeur (20) et celui des orifices latéraux (42) des cheminées (40) supportées par le plateau (20), de manière que la phase liquide débouche dans une enceinte ou chambre annulaire (28) située en périphérie du réacteur (10).

La chambre annulaire (28) est délimitée du coté externe par la paroi du réacteur (13) et du coté interne par une paroi (30) sensiblement cylindrique et concentrique à la paroi du réacteur, située dans l'espace compris entre la dite paroi du réacteur (13) et l'ensemble des cheminées situées le plus à l'extérieur.

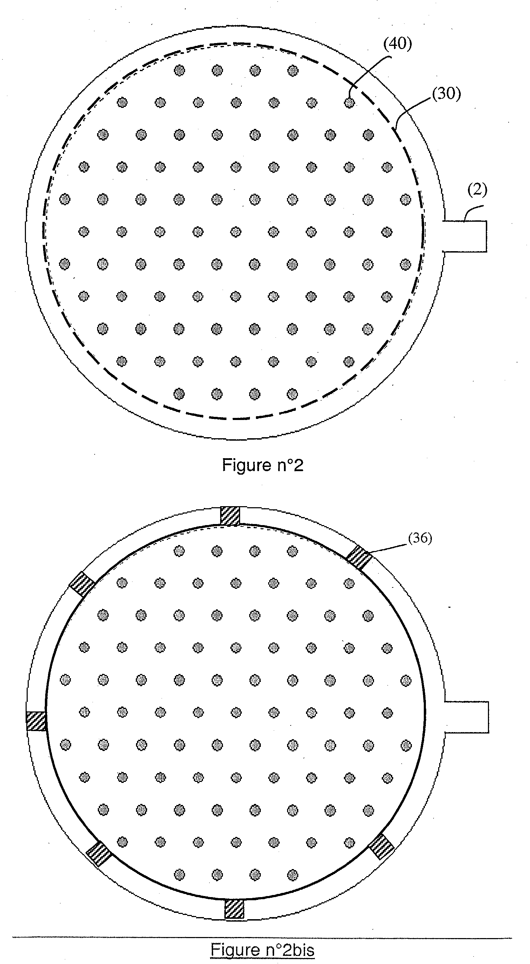

Dans une vue de dessus du réacteur telle que celle représentée par la figure 2, les cheminées les plus extérieures, c'est à dire celles se répartissant sensiblement selon le cercle de plus grand diamètre, laissent un espace libre par rapport à la paroi du réacteur (13) à l'intérieur duquel se situe la chambre annulaire (28) dont la paroi externe se confond avec la paroi du réacteur (13). Un objectif important de cette chambre annulaire est de créer un volume « tampon » dans lequel les fluctuations de l'interface liquide/gaz vont s'amortir.

La zone centrale du plateau contenant les cheminées est donc alimentée en liquide par sa partie inférieure. On évite ainsi qu'un jet liquide issu de l'entrée du réacteur vienne perturber l'interface gaz/liquide situé au dessus du plateau et créer des turbulences et/ou un moussage dans la zone liquide. Les turbulences et le moussage sont des phénomènes qu'il faut chercher à minimiser dans l'alimentation des réacteurs en lits fixes dans la mesure où ils perturbent fortement l'homogénéité de la répartition des phases gaz et liquide qui est la condition indispensable à une bonne alimentation du lit lui même. Le dispositif de la présente invention contribue indirectement à la réduction du moussage et des turbulences.

La chambre annulaire (28) est munie, de préférence dans sa partie inférieure, c'est à dire dans la partie située au voisinage du plateau, de passages (32) permettant la communication de la phase liquide avec la partie centrale du plateau distributeur (20).

Ces passages que nous appellerons sections de passage inférieures (32), peuvent former un ensemble discret d'ouvertures ou une ouverture continue.

Selon l'invention on appelle section de passage inférieure (32) une section de passage, telle qu'un orifice ou bien une fente, disposée à un niveau inférieur par rapport au niveau supérieur de la paroi interne (30) de la chambre annulaire (28).

Ainsi ces sections de passage inférieures sont situées en dessous du niveau moyen de débordement du liquide au dessus de la paroi interne (30).

De façon préférée, certaines, ou la plupart ou la totalité de ces dites sections de passage inférieures sont situées dans la moitié inférieure de la paroi interne (30), typiquement en dessous (de l'axe) de l'alimentation liquide (2). De façon préférée également, la paroi (30) comprend une pluralité de sections de passage inférieures, sensiblement réparties le long de la périphérie de la paroi (30).

De préférence, l'entrée liquide (2) n'est pas située en vis-à-vis d'une section de passage inférieure (32) pour éviter un déséquilibre d'alimentation à ce niveau.

Un point important également est que les vitesses de passage du liquide de la chambre annulaire (28) vers le centre du plateau distributeur (20) par les dites sections de passage inférieures (32) restent comprises entre certaines limites de manière à préserver l'interface entre la phase liquide et la phase gaz située au dessus, en limitant les turbulences.

L'invention concerne donc un dispositif de mélange et de distribution d'une phase liquide et d'une phase gaz placé à l'intérieur d'un réacteur vertical (10) en amont d'un lit granulaire ou entre deux lits granulaires successifs, le dit dispositif comportant un plateau (20) sensiblement horizontal couvrant toute la section du réacteur et supportant une multiplicité de cheminées (40) sensiblement verticales, généralement de section constante, comportant:
- une extrémité supérieure (43) communiquant avec la partie du réacteur située au dessus du plateau (20),
- une extrémité inférieure (21) communiquant avec la partie du réacteur située au dessous du plateau (20),
- les dites cheminées comprenant des orifices latéraux (42) disposés le long de leur paroi verticale à différents niveaux, permettant l'introduction à l'intérieur des cheminées de la phase gaz et de la phase liquide, au moins en partie de façon séparée.
- le dit dispositif comprenant une paroi interne sensiblement verticale (30), généralement fixée à sa partie inférieure au plateau (20), et située dans l'espace compris entre la paroi du réacteur(13) et la zone occupée par les cheminées, et définissant une zone annulaire (28) qui reçoit au moins la phase liquide en provenance de l'extérieur du réacteur et qui communique avec la partie centrale du plateau (20) au moyen, notamment, de sections de passage inférieures (32).

Typiquement, certaines, la plupart ou la totalité de ces sections de passage inférieures sont disposées sur la partie inférieure de la paroi interne (30).

La distance séparant les sections de passage inférieures (32) et les orifices latéraux (42) de plus bas niveau sur les cheminées (40) (typiquement disposés à un niveau supérieur) est généralement supérieure à 20 mm et de préférence comprise entre 100 et 300 mm, et le niveau du volume liquide située dans la zone annulaire (28) est typiquement supérieur au niveau du volume liquide surmontant le plateau (20) d'au moins 1 cm pour assurer un débit suffisant de liquide à travers les dites sections de passage.

De manière préférée ce niveau est généralement compris entre 1 et 10 cm. La vitesse de passage de la phase liquide au travers des sections de passage inférieures (32) est préférentiellement comprise entre 0,5 et 5 m/s. Ceci peut être obtenu par un dimensionnement adéquat des sections de passages inférieures, compte tenu du débit liquide. La largeur de la zone annulaire (28) est généralement inférieure à 5 % du diamètre du réacteur, et préférentiellement inférieure à 2 % du diamètre du réacteur.

La hauteur de la paroi interne (30) est définie de préférence de manière à être supérieure au niveau des orifices latéraux (42) de plus haut niveau, et inférieure au niveau de l'extrémité supérieure (43) des cheminées (40).

La zone annulaire (28) peut, dans certains cas, être fermée à sa partie supérieure par un toit (35) qui la rend étanche vis à vis de la phase gaz.

La paroi interne (30) peut être fixée à sa partie supérieure par des pattes la reliant à la paroi du réacteur, de manière à libérer à sa partie inférieure une section de passage sous forme d'une fente sensiblement continue. Mais tout autre mode de fixation est possible, l'invention n'étant pas liée à un mode de fixation particulier de la paroi interne (30).

Le dispositif selon la présente invention peut être appliqué de façon particulièrement intéressante mais nullement limitative dans les réacteurs d'hydrogénation sélective dans lequel le rapport volumique de la phase gaz sur la phase liquide est compris entre 1 et 400, et préférentiellement compris entre 1 et 100.

La figure 1 présente un exemple de disposition du dispositif de distribution objet de la présente invention dans le cas où le dispositif de distribution est situé en entrée d'un réacteur (10) en amont d'un lit granulaire (50) constitué de particules solides pouvant contenir une phase catalytique. Le réacteur (10) peut contenir plusieurs lits de ce type répartis sur la hauteur du réacteur et séparés par un espace suffisant qui permettra la mise en place en tête de chacun, ou au moins de certains d'entre eux, d'un dispositif de distribution tel que décrit dans la présente demande. Pour des dispositifs, selon l'invention, situés entre deux lits catalytiques superposés, on peut installer en amont du dispositif de distribution un dispositif de séparation gaz/liquide, de façon à alimenter le liquide dans la chambre annulaire du dispositif de distribution.

Ce type de réacteur comportant une pluralité de lits granulaires espacés est utilisé dans un grand nombre de procédés de raffinage et de pétrochimie, particulièrement dans les procédés d'hydrogénation sélective de coupes hydrocarbonées à nombre d'atome de carbone pouvant aller de 2 à 7.

Le dispositif de distribution est constitué d'un plateau (20) sensiblement horizontal et couvrant approximativement toute la section du réacteur (10). Le plateau (20) supporte une pluralité de cheminées (40) ouvertes à leur extrémité supérieure par une ouverture supérieure (43) et présentant le long de leur paroi latérale une série d'orifices latéraux (42) destinés au passage séparé de la phase liquide et de la phase gaz à l'intérieur des cheminées, de manière à réaliser leur mélange intime à l'intérieur des dites cheminées.

La forme de ces orifices latéraux peut être très variable, généralement circulaire ou rectangulaire, ces orifices étant préférentiellement répartis sur chacune des cheminées selon plusieurs niveaux sensiblement identiques d'une cheminée à l'autre, généralement au moins deux niveaux, et de préférence de 3 à 10 niveaux, de manière à permettre l'établissement d'un interface aussi régulier que possible entre la phase gaz et la phase liquide sur l'ensemble de la plage opératoire prévue.

La distance entre deux niveaux successifs est généralement supérieure à 20 mm, et de manière préférée comprise entre 50 mm et 150 mm. La largeur maximale des orifices latéraux qui correspondra selon leur forme au diamètre s'il s'agit d'orifice circulaire, ou à la largeur dans le cas d'un orifice rectangulaire, sera avantageusement inférieure à 75 % du diamètre des cheminées (40) et habituellement supérieure à 2 mm.

Le principe de fonctionnement du dispositif selon la présente invention consiste à laisser effectuer un mélange des phases gaz et liquide à l'intérieur des cheminées (40) avant d'injecter ce mélange en différents points couvrant au mieux la section du réacteur, par les extrémités inférieures ouvertes (21) des cheminées (40). De manière à assurer la meilleure répartition possible du mélange des phases gaz et liquide quittant les cheminées (40) par les extrémités inférieures (21), une certaine densité de cheminées est nécessaire. Cette densité est en général comprise entre 100 et 700 cheminées par m2 de section de lit, et de préférence est comprise entre 150 et 500 cheminées par m2 de section de lit.

Une caractéristique de la présente invention réside dans la mise en place d'une enceinte annulaire (28) attenante à la paroi du réacteur et comprenant une enveloppe interne (30) appelée ci-après paroi interne, cette paroi interne étant généralement sensiblement circulaire et concentrique au réacteur, et typiquement fixée par sa partie inférieure au plateau (20).

La paroi interne (30) est sensiblement verticale et positionnée dans l'espace compris entre la paroi du réacteur (13) et l'ensemble des cheminées situées le plus à l'extérieur. Le positionnement de la paroi interne (30) est tel que la largeur de la zone annulaire est généralement inférieure à 5 % du diamètre du réacteur et préférentiellement inférieure à 2 % du diamètre du réacteur. Cette largeur est typiquement inférieure à la distance séparant deux cheminées (40) voisines, distance précisément appelée entraxe.

La paroi interne (30) est munie dans sa partie inférieure, d'ouvertures (32) appelées sections de passage inférieures, mettant en communication la zone annulaire (28) avec la partie centrale du plateau (20).

Dans certains cas, la paroi interne (30) peut comporter un toit continu (35) représenté sur la figure 1 bis qui la rend étanche par rapport à la phase gaz. Dans ce cas, la phase liquide occupe l'intégralité de la zone annulaire délimitée par la paroi du réacteur (13), la paroi verticale interne (30) et le toit continu (35). La variante préférée est cependant la variante dans laquelle la partie supérieure de la zone annulaire est ouverte et communique avec la phase gaz du réacteur.

La phase liquide, matérialisée par le flux (12) est introduite depuis l'extérieur du réacteur à l'intérieur de la zone annulaire (28) par l'intermédiaire d'une conduite (2) traversant la paroi du réacteur. Elle se répartit dans l'ensemble de la zone annulaire en créant un volume liquide dont la hauteur est typiquement inférieure à la hauteur de la paroi interne (30) de manière à éviter tout débordement de liquide au dessus de la paroi interne (30).

Ceci permet de réaliser plusieurs fonctions techniques :
- La zone annulaire joue le rôle de zone tampon vis à vis de fluctuations du débit liquide : lorsqu'un débit instantané supérieur au débit moyen arrive dans la zone annulaire, le niveau liquide monte dans la zone annulaire, sans que l'interface dans la zone centrale des cheminées ne monte beaucoup. La zone annulaire (28) réalise donc un amortissement des fluctuations de débit, qui ne se produirait pas en l'absence des sections de passage inférieures (le liquide alimentant alors la zone centrale par débordement, sans effet tampon).
- L'absence de débordement liquide permet également d'éviter les phénomènes de moussage et/ou de turbulence dans la zone centrale du plateau.

Dans ce but, il existe une relation à respecter entre le débit de phase liquide entrant dans la zone annulaire, la section des passages inférieurs (32) et la hauteur de la paroi interne (30). L'homme du métier pourra aisément déterminer des sections de passage inférieures (et notamment une section totale suffisante, compte-tenu de la hauteur de la paroi interne (30), permettant d'éviter les débordements (en régime de fonctionnement normal) par dessus la partie supérieure de la paroi interne 30. La hauteur de la paroi interne (30) est supérieure au niveau des orifices latéraux (42) des cheminées (40) de plus haut niveau, tout en restant inférieure au niveau des ouvertures supérieures (43).

Dans le cas où la zone annulaire comporte un toit, la hauteur de la paroi interne (30) sera simplement inférieure au niveau des ouvertures supérieures (43).

La phase liquide passe de la zone annulaire (28) vers la partie centrale du plateau (20) à travers les sections de passage inférieures (32). Ces sections de passage inférieures (32) sont typiquement situées à un niveau inférieur au niveau le plus bas des orifices latéraux (42), de telle sorte que ces sections de passage inférieures sont entièrement immergées dans le volume de rétention liquide contenu dans la zone annulaire (28). Il s'établit donc de part et d'autre de la paroi interne (30) un premier niveau qui peut fluctuer en fonction des à-coups de débit liquide, et correspondant au volume de rétention liquide de la zone annulaire (28) et un second niveau correspondant au volume de rétention liquide du plateau (20).

Ce second niveau alimente les orifices latéraux (42) des cheminées (40). Ce second niveau définit avec la phase gaz qui le surmonte un interface particulièrement stable et quasi horizontal, car toute variation de débit de la phase liquide (12) entrante dans le réacteur va se répercuter sur le volume de rétention liquide de la zone annulaire (28) qui va ainsi jouer le rôle d'une zone tampon vis à vis du volume de rétention liquide surmontant le plateau (20). L'existence de cet interface stable et aussi plan que possible au dessus du volume de rétention liquide du plateau (20) et qui est de ce fait non moussant, est la garantie d'une alimentation régulière et uniforme de la pluralité de cheminées (40) au moyen des orifices latéraux (42).

La distance, notée (H) sur la figure 1, séparant le niveau des sections de passage inférieures (32) et le niveau le plus bas des orifices latéraux (42) est souvent supérieure à 20mm, et de préférence comprise entre 100 mm et 300 mm. Cette distance (H) a d'abord pour effet de maintenir un volume de rétention liquide suffisant au dessus du plateau (20) de manière à dissiper au moins une partie de l'énergie cinétique des jets liquides issus des sections de passage inférieures (32), situées en dessous des orifices latéraux (42) et éviter ainsi que ces jets,-liquides ne perturbent l'interface entre le volume de rétention liquide et la phase gaz le surmontant qui doit rester aussi plan que possible, quel que soit le niveau auquel il s'établit.

La distance (H) a de plus pour effet de créer un temps de séjour minimal du mélange des phases gaz et liquide à l'intérieur des cheminées (40), et donc d'optimiser le transfert de masse entre les dites phases gaz et liquide ce qui confère aux cheminées (40) un rôle de mélangeur statique. Enfin les cheminées (40) sont généralement prolongées d'une distance (h) au dessous du niveau du plateau (20) afin d'éviter qu'une partie du mélange issu des cheminées (40) se propage sur la face inférieure du plateau (20), et de réduire la distance (d) séparant les extrémités inférieures (21) de sortie des cheminées (40) et le niveau supérieur du lit granulaire situé au dessous du plateau (20).

La distance (h) est généralement comprise entre 10 et 100 mm, et préférentiellement comprise entre 20 et 80 mm. Afin d'éviter la ségrégation du mélange des phases liquide et gaz formé à l'intérieur des cheminées (40), la distance entre les extrémités inférieures (21) des cheminées (40) et le niveau supérieur du lit granulaire (22) est souvent comprise entre 0 et 50 mm, 0 exclus et de manière préférée comprise entre 0 et 20 mm, 0 exclus.

Enfin, en partie supérieure du lit granulaire catalytique (22) et reposant sur lui, on dispose généralement une couche de particules sphériques inertes (50), appelé lit de garde de manière à maintenir intact ou aussi peu perturbé que possible, la distribution du mélange des phases gaz et liquide sortant des cheminées (40) jusqu'au niveau supérieur du lit granulaire (22).

L'épaisseur de cette couche de particules inertes est généralement supérieure à 50 mm et de préférence comprise entre 100 et 300 mm. Le diamètre des particules inertes utilisées pour constituer cette couche est généralement supérieure à 6 mm et de préférence supérieure à 15 mm.

La vitesse d'injection du liquide au niveau des sections de passage inférieures (32) est généralement calculée de manière que le niveau liquide dans la zone annulaire (28) soit supérieur au niveau de liquide dans la partie centrale de 1 à 10 cm. La vitesse du liquide à la traversée des sections de passage inférieures (32) est généralement comprise entre 0,5 et 5 m/s.

La phase gaz et la phase liquide admises dans les cheminées (40) par les orifices latéraux (42) se mélangent à l'intérieur des cheminées (40). L'interface entre le volume de rétention liquide surmontant le plateau (20) et la phase gaz permet de séparer les orifices latéraux (42) en un premier groupe inférieur immergé au sein du volume de rétention liquide et qui sert à l'introduction du liquide à l'intérieur des cheminées (40), et un second groupe supérieur, c'est à dire correspondant à la partie non immergée des cheminées qui sert à l'introduction de la phase gaz à l'intérieur des dites cheminées. Les phases gaz et liquide sont ainsi introduites séparément dans chacune des cheminées (40).

Il faut bien noter que les orifices latéraux (42) disposés sur plusieurs niveaux le long des cheminées (40), ne sont pas spécifiquement affectés au passage de la phase liquide et de la phase gaz, mais se répartissent naturellement en fonction de la position de l'interface liquide qui surmonte le plateau (20) en un premier groupe inférieur assurant le passage de la phase liquide et un second groupe supérieur assurant le passage de la phase gaz. Pour que ces deux groupes inférieur et supérieur forment deux ensembles nettement séparés par un plan bien défini et quasiment horizontal, il est de première importance que l'interface entre le volume de rétention liquide et la phase gaz soit lui-même le mieux défini et le plus stable possible. L'invention a précisément pour but de garantir la qualité de cette interface dont la position peut bien entendu varier en fonction des conditions opératoires.

Il est clair que plus le débit de phase liquide est important, plus l'interface entre le volume de rétention liquide et la phase gaz est située à un niveau élevé, mais ce niveau ne dépasse pas en général le niveau des ouvertures supérieures (43) des cheminées (40).

Les figures 2 et 2 bis représentent une vue de dessus du dispositif de distribution selon l'invention dans le cas où les cheminées (40) sont disposées suivant un pas triangulaire. On voit clairement sur la figure 2 qu'il n'y a pas de cheminée dans la zone annulaire (28). Sur la figure 2 bis, on montre que la paroi interne (30) peut être fixée à la paroi du réacteur (13) par des pattes de fixation (36) de façon, en cas de besoin, à disposer d'une section de passage continue (32) dans la partie inférieure de la paroi (30).

La distance entre les cheminées (40) et la paroi interne (30) peut être diminuée autant que souhaitée.

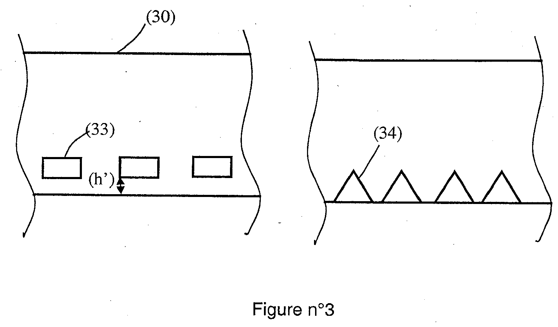

La figure 3 présente deux exemples de réalisation des sections de passage situées en partie basse de la paroi interne (30). Ces sections de passage peuvent être des fentes de section rectangulaire comme représenté en (33), circulaire ou triangulaire comme représenté en (34). Ces sections de passage peuvent également se présenter sous la forme d'une fente continue ou sensiblement continue. Lorsque les fentes forment un ensemble discret, on pourra éventuellement respecter de préférence une distance h' entre le bord inférieur des dites fentes et le niveau du plateau (20). Cette distance h' est de préférence comprise entre 0 et 30mm, 0 exclus.

### Exemple

Un test comparatif a été effectué entre un dispositif de distribution selon l'art antérieur constitué d'un plateau à cheminées perforées alimenté par un écoulement gaz suivant l'axe du réacteur et un écoulement liquide injecté directement dans le volume de rétention liquide situé au dessus du plateau depuis un tube traversant la paroi latérale du réacteur, et un dispositif selon l'invention, tel que décrit à la figure 1, comprenant un plateau à cheminées perforées alimenté en gaz de la même manière que dans le dispositif de l'art antérieur et en liquide par un tube radial débouchant sur la paroi latérale du réacteur à une distance de 100 mm au dessus du niveau du plateau et débouchant dans la zone annulaire décrite dans la présente invention.

La chambre annulaire telle que décrite dans l'invention, est délimitée par une paroi circulaire interne et par la paroi latérale du réacteur. Les deux dispositifs ont été testés sur un réacteur de diamètre 400 mm. Le plateau distributeur lui-même est identique dans le dispositif de distribution selon l'art antérieur et dans le dispositif selon la présente invention.

Le dispositif de distribution est constitué d'un plateau sur lequel sont fixées 55 cheminées de diamètre 15 mm. Les cheminées sont perforées de 20 orifices circulaires de diamètre 7 mm s'étageant sur 10 niveaux compris entre 50 et 250 mm par rapport au niveau du plateau.

Dans le dispositif selon la présente invention, le liquide est introduit depuis la ligne (2) à l'aide d'un tube traversant la paroi latérale du réacteur suivant la géométrie décrite à la figure n°1. Une paroi circulaire délimite une zone annulaire de 30 mm de large située entre la paroi (30) et la paroi latérale du réacteur. La distance entre le niveau des sections de passage de la paroi circulaire (30) et le niveau le plus bas des orifices des cheminées est de 50 mm.

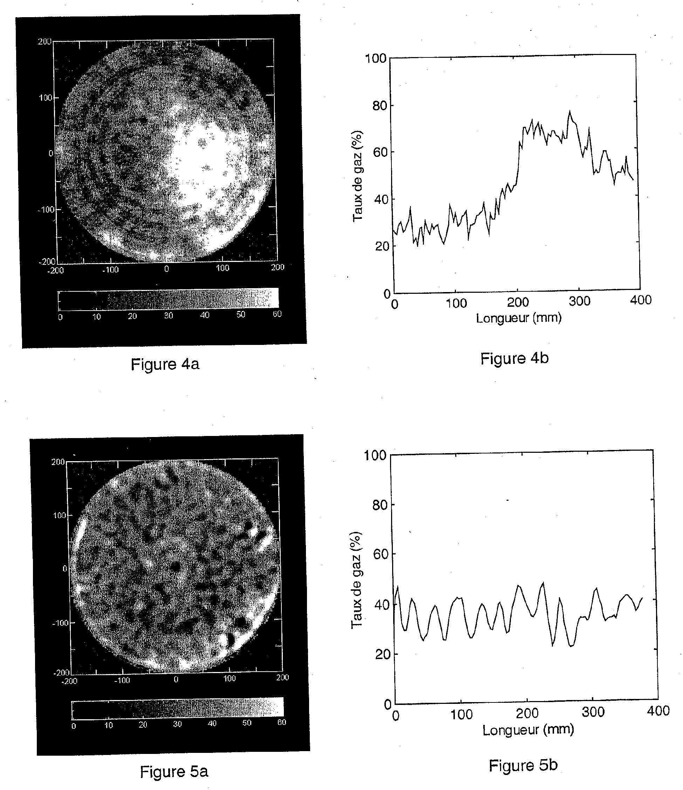

Une comparaison de la répartition du taux de gaz mesurée dans le lit catalytique à une distance de 500 mm au dessous de l'extrémité inférieure des cheminées (40) a été effectuée à l'aide d'un tomographe à rayon gamma. Les figures 4a; 4b et 5a; 5b présentent l'image du taux de gaz mesuré respectivement lorsque le dispositif de distribution selon l'art antérieur est utilisé (figures 4a et 4b), et lorsque le dispositif de distribution décrit dans la présente invention est utilisé (figures 5a et 5b).

L'échelle de couleurs s'étend du noir pour un taux de gaz de zéro (écoulement liquide seul) au blanc pour un taux de gaz de 60 %. Le débit de liquide rapporté à la section vide du réacteur est de 56 kg/(m².s), et le débit de gaz est 1 kg/(m².s). Les figures 4a et 5a, représentent une image du taux de gaz sur toute la section du lit catalytique et les figures 4b et 5b représentent un profil de taux de gaz suivant un diamètre du réacteur.

Comme on peut le constater, en l'absence du dispositif de rétention du liquide matérialisé par la zone annulaire, la distribution du gaz sur la section du lit est nettement dégradée en ce sens que la figure 4a (art antérieur) montre des niveaux de gris beaucoup moins uniformes que ceux de la figures 5a (selon l'invention).

En effet, comme le montre également le profil obtenu sur un diamètre du réacteur figure 4b, le taux de gaz n'est pas du tout homogène sur toute la section en l'absence de la zone annulaire de rétention du liquide issu de la conduite radiale (2).

Le niveau liquide est déséquilibré du fait de la dissipation d'énergie cinétique du jet de liquide qui impacte sur l'interface gaz/liquide en perturbant fortement ce dernier, et les cheminées ne sont pas toutes alimentées de la même façon. Par contre, avec le dispositif tel que décrit dans la présente demande, on obtient une distribution beaucoup plus homogène du gaz sur toute la section du lit comme le montre la figure 5b.

L'invention concerne un réacteur comprenant un dispositif de distribution d'une phase liquide et d'une phase gaz.

Typiquement un tel réacteur comprend au moins un lit fixe alimenté à co-courant descendant par une phase gaz une phase liquide, le rapport volumique entre la phase gaz et la phase liquide étant compris entre 1 et 400, et préférentiellement entre 1 et 100. L'invention est notamment applicable aux procédés de conversion de gaz de synthèse (mélanges d'hydrogène et de monoxyde de carbone), et aux procédés d'hydrogénation sélective d'hydrocarbures ayant de 2 à 7 atomes de carbone, bornes comprises, ainsi qu'aux procédés d'hydrotraitement d'hydrocarbures, par exemple de coupes gazole.

## Revendications

1. - Réacteur pour écoulement diphasique gaz et liquide à co-courant descendant comportant au moins un dispositif de mélange et de distribution de la phase gaz et de la phase liquide placé à l'intérieur dudit réacteur en amont d'un lit granulaire ou entre deux lits granulaires successifs, le dit dispositif comportant:
- un plateau (20) sensiblement horizontal couvrant toute la section du réacteur et supportant une multiplicité de cheminées (40) sensiblement verticales comportant une extrémité supérieure (43) communiquant avec la partie du réacteur située au dessus du plateau (20), une extrémité inférieure (21) communiquant avec la partie du réacteur située au dessous du plateau (20),
- les dites cheminées comprenant à différents niveaux des orifices latéraux (42) disposés le long de leur paroi verticale, et permettant l'introduction à l'intérieur des cheminées de la phase gaz et de la phase liquide au moins en partie de façon séparée,
- le dit dispositif étant **caractérisé en ce qu'**il comprend une paroi interne sensiblement verticale (30) située dans l'espace compris entre la paroi du réacteur et la zone occupée par les cheminées, et définissant avec ladite paroi du réacteur une zone annulaire (28) qui reçoit au moyen de la conduite (2) la phase liquide en provenance de l'extérieur du réacteur, et qui communique avec la partie centrale du plateau (20) au moyen des sections de passage inférieures (32), la hauteur de la paroi interne (30) étant supérieure au niveau des orifices latéraux (42) de plus haut niveau, et inférieure au niveau de l'extrémité supérieure (43) des cheminées (40).

2. - Réacteur selon la revendication 1, dans lequel la distance séparant les sections de passage inférieures (32) et les orifices latéraux (42) de plus bas niveau sur les cheminées (40) est supérieure à 20 mm, et de préférence comprise entre 100 et 300 mm, les sections de passage inférieures (32) étant disposées en dessous des orifices latéraux (42).

3. - Réacteur selon l'une des revendications 1 et 2 comprenant une pluralité de sections de passage inférieures disposées pour la plupart ou la totalité dans la moitié inférieure de la paroi interne (30).

4. - Réacteur selon l'une quelconque des revendications 1 à 3, dans lequel les sections de passage inférieures du dispositif de mélange et de distribution sont dimensionnées pour que la vitesse de passage de la phase liquide au travers ces sections de passage inférieures (32) soit comprise entre 0,5 et 5 m/s.

5. - Réacteur selon l'une quelconque des revendications 1 à 4, dans lequel la largeur de la zone annulaire (28) est inférieure à 5 % du diamètre du réacteur, et préférentiellement inférieure à 2 % du diamètre du réacteur.

6. **-** Réacteur selon l'une quelconque des revendications 1 à 5, dans lequel la zone annulaire (28) est fermée à sa partie supérieure par un toit (35) qui la rend étanche vis à vis de la phase gaz.

7. - Procédé d'hydrogénation sélective d'hydrocarbures ayant de 2 à 7 atomes de carbone dans au moins un réacteur selon l'une des revendications 1 à 6.

8. - Procédé selon la revendication 7 faisant appel pour sa mise en oeuvre au réacteur selon l'une des revendications 1 à 6, le rapport volumique entre la phase gaz et la phase liquide alimentant ledit réacteur étant compris entre 1 et 400, et préférentiellement compris entre 1 et 100.

## Patentansprüche

1. Reaktor für einen zweiphasigen Strom von Gas und Flüssigkeit im Abwärtsgleichstrom, umfassend mindestens eine Misch- und Verteilungsvorrichtung der Gasphase und der Flüssigphase, die im Inneren des Reaktors stromaufwärts von einem Festbett oder zwischen zwei aufeinanderfolgenden Festbetten angeordnet ist, wobei die Vorrichtung umfasst:
- eine im Wesentlichen horizontale Platte (20), die den gesamten Querschnitt des Reaktors bedeckt und mehrere im Wesentlichen vertikale Abzüge (40) trägt, umfassend ein oberes Ende (43), das mit dem Teil des Reaktors kommuniziert, der über der Platte (20) angeordnet ist, ein unteres Ende (21), das mit dem Teil des Reaktors kommuniziert, der unter der Platte (20) angeordnet ist,
- wobei die Abzüge auf verschiedenen Niveaus seitliche Öffnungen (42) umfassen, die entlang ihrer vertikalen Wand angeordnet sind, und das Einbringen der Gasphase und der Flüssigphase in das Innere der Abzüge mindestens teilweise getrennt gestatten,
- wobei die Vorrichtung **dadurch gekennzeichnet ist, dass** diese eine im Wesentlichen vertikale Innenwand (30) umfasst, die in dem Raum zwischen der Wand des Reaktors und der von den Abzügen eingenommenen Zone angeordnet ist, und mit der Wand des Reaktors eine ringförmige Zone (28) definiert, die mittels der Leitung (2) die von außerhalb des Reaktors stammende Flüssigphase aufnimmt, und die mit dem zentralen Teil der Platte (20) mittels unterer Durchgangsabschnitte (32) kommuniziert, wobei die Höhe der Innenwand (30) größer ist als das Niveau der seitlichen Öffnungen (42) mit dem höchsten Niveau und kleiner ist als das Niveau des oberen Endes (43) der Abzüge (40).

2. Reaktor nach Anspruch 1, wobei die Distanz, welche die unteren Durchgangsabschnitte (32) und die seitlichen Öffnungen (42) mit dem tiefsten Niveau auf den Abzügen (40) trennt, größer ist als 20 mm, und vorzugsweise zwischen 100 und 300 mm beträgt, wobei die unteren Durchgangsabschnitte (32) unter den seitlichen Öffnungen (42) angeordnet sind.

3. Reaktor nach einem der Ansprüche 1 und 2, umfassend mehrere untere Durchgangsabschnitte, die mehrheitlich oder zur Gänze in der unteren Hälfte der Innenwand (30) angeordnet sind.

4. Reaktor nach einem der Ansprüche 1 bis 3, wobei die unteren Durchgangsabschnitte der Misch- und Verteilungsvorrichtung derart bemessen sind, dass die Durchgangsgeschwindigkeit der Flüssigphase quer über diese unteren Durchgangsabschnitte (32) zwischen 0,5 und 5 m/s liegt.

5. Reaktor nach einem der Ansprüche 1 bis 4, wobei die Breite der ringförmigen Zone (28) kleiner ist als 5 % des Durchmessers des Reaktors, und vorzugsweise kleiner ist als 2 % des Durchmessers des Reaktors.

6. Reaktor nach einem der Ansprüche 1 bis 2, wobei die ringförmige Zone (28) in ihrem oberen Teil durch ein Dach (35) verschlossen wird, das diese gegen die Gasphase abdichtet.

7. Verfahren zur selektiven Hydrierung von Kohlenwasserstoffen mit 2 bis 7 Kohlenstoffatomen in mindestens einem Reaktor nach einem der Ansprüche 1 bis 6.

8. Verfahren nach Anspruch 7, wobei für seine Durchführung der Reaktor nach einem der Ansprüche 1 bis 6 verwendet wird, wobei das Volumsverhältnis zwischen der Gasphase und der Flüssigphase, die den Reaktor speisen, zwischen 1 und 400, und vorzugsweise zwischen 1 und 100, liegt.

## Claims

1. A device for mixing and distributing a liquid phase and a gas phase inside a vertical reactor upstream of a granular bed or between two successive granular beds, said device comprising:
• a substantially horizontal plate (20) covering the entire cross section of the reactor and supporting a plurality of substantially vertical conduits (40) comprising an upper end (43) communicating with the portion of the reactor located above the plate (20) and a lower end (21) communicating with the portion of the reactor located below the plate (20);
• said conduits comprising lateral orifices (42) at different levels disposed along their vertical wall and allowing the gas phase and the liquid phase to be introduced into the conduits at least partially in a separated manner;
• said device being **characterized in that** it comprises a substantially vertical inner wall (30) located in the space comprised between the wall of the reactor and the zone occupied by the conduits, and defining with said outer wall an annular zone (28) which receives by mean of the line (2) the liquid phase from outside the reactor and which communicates with the central portion of the plate (20), by means of lower cross sections of flow (32), the height of internal wall (30) being higher than the level of the lateral orifices (42) of the higher level, and lower than the level of the upper end (43) of the conduits (40).

2. A device according to claim 1, in which the distance separating the lower cross sections of flow (32) and the lowest lateral orifices (42) of the conduits (40) is more than 20 mm, and is preferably in the range 100 to 300 mm, the lower cross sections of flow (32) being disposed below the lateral orifices (42).

3. A device according to claim 1 or claim 2, comprising a plurality of lower cross sections of flow entirely or mainly disposed in the lower half of the inner wall (30).

4. A device according to any one of claims 1 to 3, in which the dimensions of the lower cross sections of flow are such that the flow rate of the liquid phase through said lower cross sections of flow (32) is in the range 0.5 to 5 m/s.

5. A device according to any one of claims 1 to 4, in which the width of the annular zone (28) is less than 5% of the diameter of the reactor, and preferably less than 2% of the diameter of the reactor.

6. A device according to any one of claims 1 to 5, in which the upper portion of the annular zone (28) is closed by a top (35) which renders it tight to the gas phase.

7. A process for the selective hydrogenation of hydrocarbons containing 2 to 7 carbon atoms in at least one reactor according to claims 1 to 6.

8. A process for selective hydrogenation according to claim 7, using a reactor according to the claims 1 to 6, the volumetric ratio between the gas phase and the liquid phase being in the range 1 to 400, and preferentially in the range 1 to 100.
